(19) 

**Europäisches Patentamt**
**European Patent Office**
**Office européen des brevets**

(11) **EP 2 574 829 A1**

(12) **EUROPEAN PATENT APPLICATION**
published in accordance with Art. 153(4) EPC

(43) Date of publication:
**03.04.2013 Bulletin 2013/14**

(21) Application number: **10850714.6**

(22) Date of filing: **28.04.2010**

(51) Int Cl.:
*F16H 63/42* (2006.01)          *B60W 10/10* (2012.01)
*B60W 20/00* (2006.01)

(86) International application number:
**PCT/JP2010/057578**

(87) International publication number:
**WO 2011/135697 (03.11.2011 Gazette 2011/44)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **TOYOTA JIDOSHA KABUSHIKI
KAISHA
Toyota-shi,
Aichi-ken, 471-8571 (JP)**

(72) Inventors:
• **TOYORA, Sachio**
  **Toyota-shi, Aichi 471-8571 (JP)**

• **TABATA, Mitsuhiro**
  **Toyota-shi, Aichi 471-8571 (JP)**
• **OKAMURA, Yukari**
  **Toyota-shi, Aichi 471-8571 (JP)**
• **TSUMORI, Chika**
  **Toyota-shi, Aichi 471-8571 (JP)**

(74) Representative: **Albutt, Anthony John
D Young & Co LLP
120 Holborn
London EC1N 2DY (GB)**

(54) **GEAR SHIFT INSTRUCTION SYSTEM FOR VEHICLES**

(57)      A hybrid ECU (100) includes a learning device configured to learn a gear shift operation time of a driver with respect to a manual transmission (30) mounted on a hybrid vehicle (1); and a gear shift instructing device configured to set an instructing gear shift stage to the manual transmission (30) suited for restart of an engine (10) in a stopped state during traveling according to a learned result of the learning device, and instruct the driver to perform a gear shift operation to the instructing gear shift stage. For instance, the instructing gear shift stage is a gear shift stage corresponding to an engine revolution number greater than or equal to an idle revolution number and a minimum of engine revolution numbers at a time of completion of the gear shift operation estimated for every gear shift stage.

FIG.1

EP 2 574 829 A1

**Description**

Field

The present invention relates to a gear shift instructing system of a vehicle that instructs a driver to perform a gear shift operation to a requested gear shift stage with respect to a transmission mounted on the vehicle. Background

A technique of restarting an engine in a stopped state during traveling is conventionally known. For instance, Patent Literature 1 discloses a hybrid vehicle for changing a gear shift stage of an automatic transmission to a low-speed stage (first gear) during low-speed traveling and to a high-speed stage (second gear) during high-speed traveling to engage a lockup clutch and startup at a torque of a motor when starting the engine in a stopped state during EV traveling with a motor alone.

Patent Literature 2 discloses a gear shift instructing device of an automobile for providing an interval of a predetermined time from when an executing condition of a gear shift instruction is met until a gear shift instruction is actually executed on the driver (gear shift instruction delay control), and resolving the trouble of the driver involved in the frequency of the gear shift instruction. Patent Literature 3 discloses a vehicle gear shift instructing device for detecting a time from when a gear shift instruction signal is output until gear shift is executed in the transmission, and changing an output timing of the gear shift instruction signal so that such time becomes short based on the time to have the output timing accord with the driving property of the driver.

Citation List

Patent Literature

Patent Literature 1: Japanese Patent Application Laid-open No. H08-216700
Patent Literature 2: Japanese Patent Application Laid-open No. 2008-95881
Patent Literature 3: Japanese Patent Application Laid-open No. H05-180339

Summary

Technical Problem

In the technique described in Patent Literature 1, significant variation does not occur in the time from when the gear shift control device makes a gear shift command to the transmission until the transmission completes the gear shift since the mounted transmission is an automatic transmission. However, if the transmission is a manual transmission, the gear shift operation time differs for every driver, whereby the time from when the driver starts the gear shift operation until the transmission completes the gear shift, for example, varies. If the gear shift operation of the driver is slow, the vehicle speed lowers the longer the gear shift operation time, and hence the engine revolution number cannot be raised up to the revolution number necessary for startup due to the lowering of the vehicle speed and the engine may not be started even if the gear is shifted to the gear shift stage scheduled at the beginning.

It is an object of the present invention to improve the drawbacks of the conventional example, and to provide a gear shift instructing system of a vehicle capable of restarting an engine in a stopped state during traveling regardless of the difference in the gear shift operation time of the driver.

Solution to Problem

In order to achieve the above mentioned object, a gear shift instructing system of a vehicle according to the present invention includes a learning device configured to learn a gear shift operation time of a driver with respect to a transmission mounted on the vehicle; and a gear shift instructing device configured to set an instructing gear shift stage to the transmission suited for restart of an engine in a stopped state during traveling according to a learned result of the learning device, and instruct the driver to perform a gear shift operation to the instructing gear shift stage.

Here, it is desirable that the instructing gear shift stage is a gear shift stage corresponding to an engine revolution number greater than or equal to an idle revolution number and a minimum of engine revolution numbers at a time of completion of the gear shift operation estimated for every gear shift stage.

Further, it is desirable that the gear shift instructing device performs a setting of the instructing gear shift stage corresponding to the learned result when in low-speed traveling, and sets a reference instructing gear shift stage corresponding to a vehicle speed irrespective of the learned result as the instructing gear shift stage when in high-speed traveling.

It is considered that the vehicle is a hybrid vehicle including an electrical power source in addition to the engine, has a gear shift position for every gear shift stage of the transmission when traveling using a power of the engine and a traveling mode selecting position for traveling only with power of the electrical power source, and includes a gear shift operating device configured to operate the transmission according to the gear shift position or the traveling mode selecting position selected by the gear shift operation of the driver.

Advantageous Effects of Invention

The gear shift instructing system of the vehicle according to the present invention sets the instructing gear shift stage suited for the restart during traveling of the engine using the learned result of the gear shift operation time of the driver, so that the engine revolution number of when the gear shift operation to the instructing gear shift stage is completed can be raised to the magnitude enabling the restart, and the engine can be restarted. Therefore, the engine can be restarted even if the gear shift operation time of the driver is different. In the gear shift instructing system, the instructing gear shift stage suited for the restart of the engine is instructed in accordance with the gear shift operation property of the driver, and hence the engine can be restarted even if the gear shift operation time of the driver is slow and an event where the engine cannot be restarted depending on the driver can be suppressed.

Brief Description of Drawings

FIG. 1 is a view illustrating one example of a hybrid vehicle applied with a gear shift instructing system of a vehicle according to the present invention.
FIG. 2 is a view at a time of neutral state selection illustrating an example of a gear shift operating device and an EV traveling mode switching device.
FIG. 3 is a view at a time of EV traveling mode selection illustrating an example of the gear shift operating device and the EV traveling mode switching device.
FIG. 4 is a flowchart illustrating an entire operation of a gear shift instructing system.
FIG. 5 is a flowchart illustrating a setting operation of an instructing gear shift stage when stopping the EV traveling and restarting the engine.

Description of Embodiments

An embodiment of a gear shift instructing system of a vehicle according to the present invention will be hereinafter described in detail based on the drawings. It should be noted that the present invention is not limited by the embodiment.

[Embodiment]

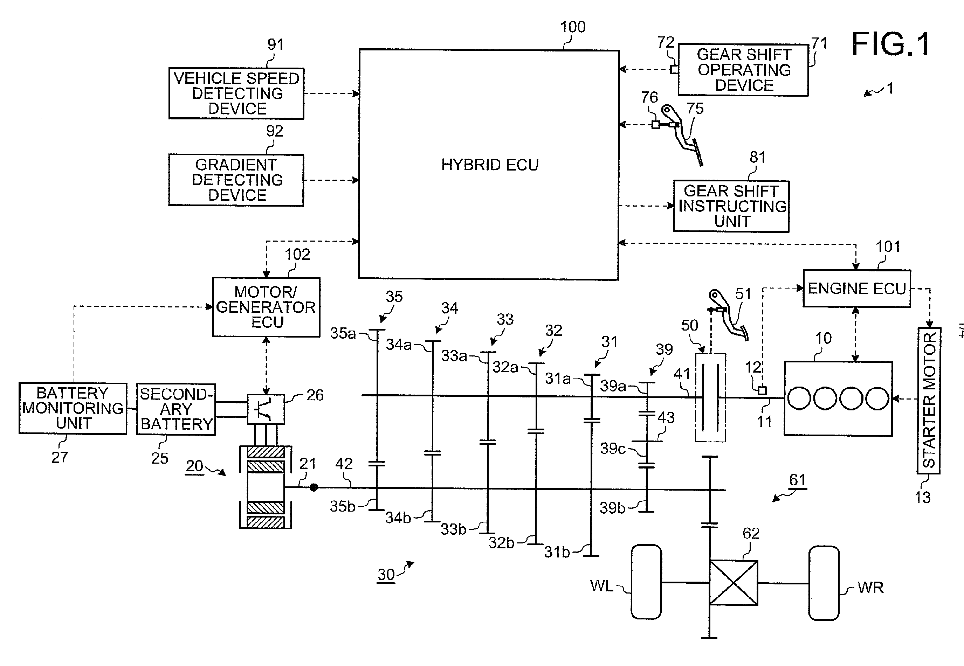

An embodiment of a gear shift instructing system of a vehicle according to the present invention will be described based on FIG. 1 to FIG. 5.

A vehicle to be applied with the gear shift instructing system of the present invention is that in which an engine is at least provided as a power source and a transmission enabling a driver to manually shift a gear shift stage is arranged, where the engine can be stopped while traveling and the vehicle can be traveled in the stopped state. The engine referred to herein refers to a mechanical power source having mechanical energy as a power. In the present embodiment, a so-called hybrid vehicle including an electrical power source having the mechanical energy converted from electrical energy as a power in addition to the mechanical power source, and being able to travel while switching among an engine traveling mode using only the power of the mechanical power source, an EV traveling mode using only the power of the electrical power source, and a hybrid traveling mode using both the mechanical power source and the electrical power source will be described by way of example. One example of the hybrid vehicle will be described using FIG. 1. A reference number 1 in FIG. 1 illustrates a hybrid vehicle of the present embodiment.

The hybrid vehicle 1 includes an engine 10 serving as the mechanical power source for outputting a mechanical power (engine torque) from an output shaft (crankshaft) 11. The engine 10 may be an internal combustion, an external combustion, and the like. The engine 10 has the operation thereof controlled by an electronic control unit for engine (hereinafter referred to as "engine ECU") 101. A crank angle sensor 12 for detecting a rotation angle (crank angle) of the output shaft 11 is prepared for the engine 10. The engine ECU 101 performs calculation of an engine revolution number based on a detected signal of the crank angle sensor 12.

The hybrid vehicle 1 includes a motor as an electrical power source, a generator enabling power driving, or a motor/generator enabling driving of both power and regeneration. A motor/generator 20 will be described herein by way of example. The motor/generator 20 is configured, for example, as a permanent magnet AC synchronous electrical motor, which operation is controlled by an electronic control unit for motor/generator (hereinafter referred to as "motor/generator ECU") 102. During power driving, the motor/generator 20 functions as the motor (electrical motor) thus converting the electrical energy supplied through a secondary battery 25 and an inverter 26 to the mechanical energy, and outputting the mechanical power (motor power torque) from a rotation shaft 21. During regeneration driving, on the other hand, the motor/generator 20 functions as the generator (power generator) thus converting the mechanical energy to the electrical energy when the mechanical power (motor regeneration torque) is input from the rotation shaft 21, and accumulating the same in the secondary battery 25 as electrical power through the inverter 26.

The hybrid vehicle 1 includes a battery monitoring unit 27 for detecting a charged state (SOC: State Of Charge) of the secondary battery 25. The battery monitoring unit 27 transmits a signal related to the detected charged state of the secondary battery 25 (i.e., signal related to charged state amount (SOC amount)) to the motor/generator ECU 102. The motor/generator ECU 102 performs a determination on the charged state of the secondary battery 25 based on such signal, and determines whether or not charging of the secondary battery 25 is necessary.

The hybrid vehicle 1 includes a power transmitting device including a multi-step manual transmission 30, and the like. The power transmitting device transmits the power (engine torque, motor power torque) of the engine 10 and the motor/generator 20 to driving wheels WL, WR as drive force.

The manual transmission 30 includes an input shaft 41 to which an engine torque is input, and an output shaft 42, arranged parallel to the input shaft 41 with a spacing, for outputting torque towards the driving wheels WL, WR.

The engine torque is input to the input shaft 41 through a clutch 50. The clutch 50 is, for example, a friction clutch device configured to switch to an engaged state of engaging the output shaft 11 of the engine 10 and the input shaft 41, and a released state (disengaged state) of releasing (disengaging) the output shaft 11 and the input shaft 41 from the engaged state. The engaged state referred to herein is a state in which torque can be transmitted between the output shaft 11 and the input shaft 41, and the released state (disengaged state) is a state in which torque cannot be transmitted between the output shaft 11 and the input shaft 41. The clutch 50 has the switching operation of the engaged state and the released state mechanically carried out through a link mechanism, a wire, or the like according to an operation on a clutch pedal 51 by the driver.

In the present embodiment, a rotation shaft 21 of the motor/generator 20 is coupled to the output shaft 42. Therefore, when the motor/generator 20 is power driven, the motor power torque is transmitted to the manual transmission 30 through the output shaft 42. When the motor/generator 20 is regeneration driven, on the other hand, the output torque from the output shaft 42 is transmitted to a rotor of the motor/generator 20.

Furthermore, the manual transmission 30 illustrated herein has gear shift stages of five stages in the forward direction and one stage in backward direction, and includes a first speed gear stage 31, a second speed gear stage 32, a third speed gear stage 33, a fourth speed gear stage 34, and a fifth speed gear stage 35 for the forward gear shift stage, and a backward gear stage 39 for the backward gear shift stage. The forward gear shift stage is such that the gear shift ratio becomes smaller in the order of the first speed gear stage 31, the second speed gear stage 32, the third speed gear stage 33, the fourth speed gear stage 34, and the fifth speed gear stage 35. The configuration of the manual transmission 30 of FIG. 1 is simply described, where the arrangement of each gear shift stage is not necessarily limited to the mode of FIG. 1.

In the power transmitting device of the present example, the engine torque input to the input shaft 41 is gear shifted with one of the gear shift stages (gear stages 31 to 35, 39) and transmitted to the output shaft 42 by having the clutch 50 in the engaged state. Furthermore, the motor power torque is transmitted to the output shaft 42 in the power transmitting device. In the power transmitting device, the torque output from the output shaft 42 is decelerated with a final deceleration mechanism 61, and transmitted to the driving wheels WL, WR as the drive force through a differential mechanism 62.

The first speed gear stage 31 is configured by a gear pair of a first speed drive gear 31a and a first speed driven gear 31b in a meshed state with each other. The first speed drive gear 31a is arranged on the input shaft 41, and the first speed driven gear 31b is arranged on the output shaft 42. The second speed gear stage 32 to the fifth speed gear stage 35 include second speed drive gear 32a to fifth speed drive gear 35a, and second speed driven gear 32b to fifth speed driven gear 35b, similar to the first speed gear stage 31.

The backward gear stage 39 is configured by a backward drive gear 39a, a backward driven gear 39b, and a backward intermediate gear 39c. The backward drive gear 39a is arranged on the input shaft 41, and the backward driven gear 39b is arranged on the output shaft 42. The backward intermediate gear 39c is meshed with the backward drive gear 39a and the backward driven gear 39b, and is arranged on a rotation shaft 43.

In the configuration of the manual transmission 30, one of the drive gears of the gear shift stages is arranged to integrally rotate with the input shaft 41, and the remaining drive gears are arranged to relatively rotate with respect to the input shaft 41. One of the driven gears of the gear shift stages is arranged to integrally rotate with the output shaft 42, and the remaining driven gears are arranged to relatively rotate with respect to the output shaft 42.

A sleeve (not illustrated) that moves in the axis line direction according to the gear shift operation of the driver is arranged on the input shaft 41 and the output shaft 42. The sleeve of the input shaft 41 is arranged between each drive gear of the two gear shift stages relatively rotatable with the input shaft 41. The sleeve of the output shaft 42 is arranged between each driven gear of the two gear shift stages relatively rotatable with the output shaft 42. The sleeve performs the movement in the axis line direction through a link mechanism and a fork (not illustrated) coupled to a gear shift operating device 71 when the driver operates the gear shift operating device 71. The moved sleeve causes the relatively rotatable drive gear and the driven gear positioned in the moved direction to integrally rotate with the input shaft 41 and the output shaft 42. In such manual transmission 30, the sleeve is moved in the direction corresponding to the gear shift operation of the gear shift operating device 71 of the driver, so that the switch to the gear shift stage corresponding to the gear shift operation or the switch to the neutral state (i.e., state in which transmission of torque cannot be carried out between the input shaft 41 and the output shaft 42) are executed.

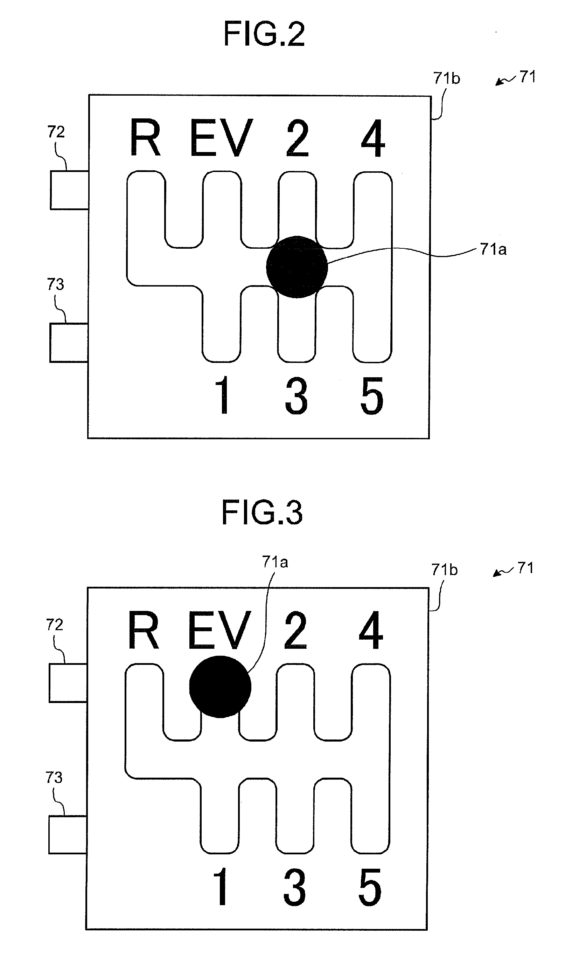

As illustrated in FIG. 2, the gear shift operating device 71 includes a shift lever 71a, which the driver uses to perform the gear shift operation, a so-called shift gauge 71b for guiding the shift lever 71a for the respective gear shift stage, and the link mechanism and the fork mentioned above. FIG. 2 illustrates a position of the shift lever 71a when operating the manual transmission 30 to the neutral state. "1 to 5" and "R" of the shift gauge 71b of FIG. 2 indicate the gear shift positions (select positions) of the first speed gear stage 31 to fifth speed gear stage 35 and the backward gear stage 39.

In the hybrid vehicle 1, the engine traveling mode, the EV traveling mode, and the hybrid traveling mode are at least prepared for the traveling mode.

In the hybrid vehicle 1, the engine traveling mode or the hybrid traveling mode is selected when the shift lever 71a is positioned at one of the gear shift positions 1 to 5, R of the shift gauge 71b.

In the hybrid vehicle 1, an EV traveling mode switching device operated by the driver when the EV traveling mode is selected is used. The function of the EV traveling mode switching device is also provided to the gear shift operating device 71 herein. That is, the gear shift operating device 71 of the present embodiment not only enables the driver to switch the gear shift stage of the manual transmission 30, but also has a function of the EV traveling mode switching device of when the driver switches to the EV traveling mode. For instance, the gear shift operating device 71 includes on the shift gauge 71b a select position of the shift lever 71a, similar to the gear shift positions 1 to 5, R, or the EV traveling mode selecting position EV for switching to the EV traveling mode. In the hybrid vehicle 1 of the present embodiment, when the shift lever 71a is operated to the EV traveling mode selecting position EV as illustrated in FIG. 3, the manual transmission 30 becomes a neutral state by the sleeve or the like, and the traveling mode becomes the EV traveling mode.

The gear shift operating device 71 includes an EV traveling mode selecting position detecting unit 72 for detecting whether or not the shift lever 71a is positioned at the EV traveling mode selecting position EV. The EV traveling mode selecting position detecting unit 72 is a position information detecting sensor or the like for detecting that the shift lever 71a is at the EV traveling mode selecting position EV, as illustrated in FIG. 3, for example. The detected signal of the EV traveling mode selecting position detecting unit 72 is transmitted to an electronic control unit (hereinafter referred to as "hybrid ECU") 100 for comprehensively controlling the operation of the entire vehicle. The hybrid ECU 100 can exchange information such as detected signals of various sensors and control commands between the engine ECU 101 and the motor/generator ECU 102.

The gear shift operating device 71 also includes a gear shift position detecting unit 73 for detecting on which gear shift position 1 to 5, R of the shift gauge 71b the shift lever 71a is at, that is, which gear shift stage the driver selected. The gear shift position detecting unit 73 may use the position information detecting sensor, and the like capable of detecting on which gear shift position 1 to 5, R the shift lever 71a is at, for example. The detected signal is transmitted to the hybrid ECU 100. The hybrid ECU 100 determines the selected gear shift stage of the driver and the current gear shift stage based on the detected signal. For the sake of convenience, the gear shift position detecting unit 73 and the EV traveling mode selecting position detecting unit 72 are illustrated as separate bodies, but may be replaced with a shift lever position detecting unit (not illustrated) in which they are integrated. The hybrid ECU 100 may estimate the current gear shift stage from the engine torque, the wheel speed, and the like using the well known technique known in the technical field.

When the shift lever 71a is operated to the gear shift position 1 to 5, R, the hybrid ECU 100 selects either the engine traveling mode or the hybrid traveling mode. For instance, the hybrid ECU 100 performs switching of the engine traveling mode and the hybrid traveling mode based on the set drive request (requesting drive force) of the driver, the information (SOC amount) of the charged state of the secondary battery 25 transmitted from the motor/generator ECU 102, the information of the vehicle traveling state (information of vehicle transverse acceleration detected by a vehicle transverse acceleration detecting device (not illustrated), slip state of the driving wheels WL, WR detected by a wheel slip detecting device, etc.).

When selecting the engine traveling mode, the hybrid ECU 100 sends a control command to the engine ECU 101 and the motor/generator ECU 102 to generate the requesting drive force with only the engine torque. In such a case, the information of the engine torque that satisfies the requesting drive force at the current gear shift stage or the gear shift stage after the gear shift operation, for example, is transmitted as the control command to the engine ECU 101. The engine ECU 101 then performs control of fuel injection amount or the like of the engine 10 to generate the relevant engine torque. The control command is sent to the motor/generator ECU 102 so as to prevent the motor/generator 20 from operating as the motor or the generator. The hybrid vehicle 1 may perform traveling in a so-called fuel-cut state in which the supply of fuel to the engine 10 is stopped or a so-called free-run traveling in which the engine 10 is stopped in the engine traveling mode.

When selecting the hybrid traveling mode, on the other hand, the hybrid ECU 100 sends a control command to the engine ECU 101 and the motor/generator ECU 102 to generate the requesting drive force with the engine torque and the output of the motor or the generator of the motor/generator 20. In such a case, the information of the engine torque and the motor power torque that satisfy the requesting drive force at the current gear shift stage or the gear shift stage after the gear shift operation, for example, is transmitted as the control command to the engine ECU 101 and the motor/generator ECU 102 when using both the engine torque and the motor power torque. The engine ECU 101 then performs control of the engine 10 to generate the relevant engine torque, and the motor/generator ECU 102 controls the power supplying amount to the motor/generator 20 to generate the relevant motor power torque. When performing regeneration of power in the motor/generator 20, the control command is sent to the motor/generator ECU 102 so as to operate the motor/generator 20 as the generator. In this case, for example, the information of the engine torque increased by the amount of motor regeneration torque is sent to the engine ECU 101. The hybrid vehicle 1 may perform the traveling in the fuel-cut state or the free-run traveling, similar to the engine traveling mode, in the hybrid traveling mode. In such traveling, the motor/generator 20 may be regeneration driven.

When the shift lever 71a is operated to the EV traveling mode selecting position EV, the hybrid ECU 100 sends the control command to the engine ECU 101 and the motor/generator ECU 102 to generate the requesting drive force with only the motor power torque. In this case, the information of the motor power torque that satisfies the requesting drive force is transmitted as the control command to the motor/generator ECU 102. Since the fuel economy degrades if the engine 10 is running while the manual transmission 30 is in the neutral state, the control command to stop the operation of the engine 10 is sent to the engine ECU 101 to enhance the fuel economy. Furthermore, in the EV traveling mode, the control command may be sent to the motor/generator ECU 102 to enable regeneration braking when the foot of the driver is removed from a acceleration pedal 75 or when the deceleration request of the hybrid vehicle 1 is made with the brake operation or the like.

In the hybrid vehicle 1 of the present embodiment, the switching between the engine traveling mode or the hybrid traveling mode, and the EV traveling mode is executed with the operation of the clutch 50 and the operation of the gear shift operating device 71 by the driver as a trigger. When switching from the engine traveling mode or the hybrid traveling mode to the EV traveling mode, the driver performs the releasing operation of the clutch 50, the operation from the gear shift position 1 to 5 of the shift lever 71a to the EV traveling mode selecting position EV, and the engagement operation of the clutch 50 in order. In this case, the detected signal received by the hybrid ECU 100 is changed from the detected signal of the gear shift position detecting unit 73 to the detected signal of the EV traveling mode selecting position detecting unit 72. When switching from the EV traveling mode to the engine traveling mode or the hybrid traveling mode, the releasing operation of the clutch 50, the operation from the EV traveling selecting position EV to the gear shift position 1 to 5 of the shift lever 71a, and the engagement operation of the clutch 50 are performed in order. In this case, the detected signal received by the hybrid ECU 100 is changed from the detected signal of the EV traveling mode selecting position detecting unit 72 to the detected signal of the gear shift position detecting unit 73.

When the driver pushes down the acceleration pedal 75 and makes an acceleration request during the EV traveling, for example, the hybrid vehicle 1 may continue the current EV traveling mode if the acceleration request can be realized with only the motor power torque. If, on the other hand, the acceleration request cannot be realized with only the motor power torque, switch needs to be made to the engine traveling mode or the hybrid traveling mode to use the engine torque. However, it is difficult for the driver to decide on such switching. Since the traveling with only the motor power torque becomes difficult also when the secondary battery 25 lacks in remaining power accumulation amount during the EV traveling, the hybrid vehicle 1 needs to switch to the engine traveling mode or the hybrid traveling mode to use the engine torque. However, it is also difficult for the driver to determine whether the switching is necessary for either one of the switching. Thus, the hybrid vehicle 1 includes a traveling mode determining device for determining the necessity of switching of the traveling mode and a traveling mode instructing device for instructing the switching of the traveling mode to the driver. The traveling mode determining device can be assumed to determine the necessity of gear shift operation to one of the gear shift positions 1 to 5 or the EV traveling mode selecting position EV, and thus can also be referred to as a gear shift determining device. The traveling mode instructing device urges the driver to perform the gear shift operation to the gear shift stage (one of gear shift positions 1 to 5) corresponding to the acceleration request and the like, and can also be referred to as a gear shift instructing device. Such devices will be hereinafter described as the gear shift determining device and the gear shift instructing device.

The gear shift determining device and the gear shift instructing device of the present embodiment are prepared as one of the control functions of the hybrid ECU 100.

The gear shift determining device makes the determination on the necessity of the gear shift operation (i.e., changing operation of traveling mode) and performs the setting of the gear shift stage (hereinafter referred to as "instructing gear shift stage") to be the instructing target of the gear shift instructing device. When determined that the gear shift (change of traveling mode) is necessary, for example, the gear shift determining device performs the setting of the instructing gear shift stage using various types of information such as the current position of the shift lever 71a, the current vehicle speed, and the acceleration operation amount of the driver. The vehicle speed is detected by a vehicle speed detecting device 91. A wheel speed sensor, for example, may be used for the vehicle speed detecting device 91, where the vehicle speed can be estimated based on the wheel speed. The acceleration operation amount is detected by an acceleration operation amount detecting device 76 such as an acceleration opening degree sensor.

The gear shift instructing device transmits the information of the instructing gear shift stage to the driver through vision or hearing, for example. A gear shift instructing unit 81 for transmitting the information is arranged in the vehicle compartment. The gear shift instructing unit 81 is an information displaying section such as a monitor, a speaker for outputting audio, or the like.

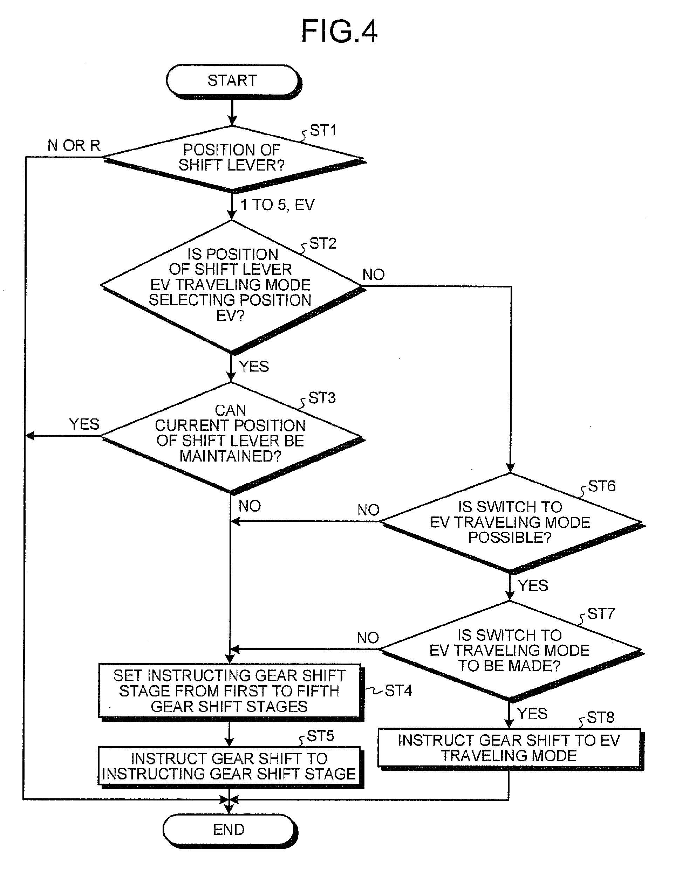

The basic operation of the gear shift instructing system including the gear shift determining device and the gear shift instructing device will be described based on a flowchart of FIG. 4.

First, the gear shift determining device determines the current position of the shift lever 71a (step ST1), and terminates the present calculation process if the position is the neutral position N (position of shift lever 71a of FIG. 2) or the gear shift position R rather than the gear shift position 1 to 5 or the EV traveling mode selecting position EV.

If the current position of the shift lever 71a is one of the gear shift positions 1 to 5 or the EV traveling mode selecting position EV, the gear shift determining device further determines whether or not the relevant position is the EV traveling mode selecting position EV (step ST2).

If the current position of the shift lever 71a is the EV traveling mode selecting position EV, the gear shift determining device determines whether or not such position (EV traveling mode selecting position EV) of the shift lever 71a can be maintained (step ST3). Determination is made here that the EV traveling mode selecting position EV cannot be maintained if one of the three information for making the determination is met, the information being whether a requested output Pdrr of the driver with respect to the power source exceeds the output upper limit value Pmglim of the motor/generator 20, whether a requested drive torque Tdrr of the driver with respect to the power source exceeds the upper limit value Tmglim of the motor power torque of the motor/generator 20, or whether abnormality occurred in the hybrid system (HV system). Step ST3 is thus a step for determining whether or not the EV traveling can be continued. Thus, if negative determination is made that the EV traveling mode selecting position EV cannot be maintained in step ST3, the EV traveling cannot be continued, and determination is made that shift from the EV traveling mode to the engine traveling mode or the hybrid traveling mode is necessary.

The requested output Pdrr and the requested drive torque Tdrr of the driver with respect to the power source are obtained based on the acceleration operation amount of the driver. The output upper limit value Pmglim and the upper limit value Tmglim of the motor power torque of the motor/generator 20 are upper limit values of the output and the motor power torque that can be output by the motor/generator 20 in the hybrid vehicle 1, and are determined based not only on the output performance of the motor/generator 20 but also on the performance of the secondary battery 25, the output limitation set from the request of the durability and the like of the motor/generator 20 and the secondary battery 25. If the requested output Pdrr exceeds the output upper limit value Pmglim or the requested drive torque Tdrr exceeds the upper limit value Tmglim of the motor power torque, the hybrid vehicle 1 cannot realize the request such as acceleration made by the driver in the EV traveling. Thus, determination is made in this case that the EV traveling mode selecting position EV cannot be maintained.

The abnormality of the hybrid system is a situation where the basic performance demanded on the hybrid vehicle 1 is inhibited. For example, the basic performance includes the drivability, performance (so-called sound-vibration performance) with respect to noise and vibration by gear rattling and the like of the gears, battery balance, power balance between the engine 10 and the motor/generator 20 for maintaining the battery balance within a defined range, protection of components, and the like. Thus, if abnormality occurred in the hybrid system, determination is made that the EV traveling mode selecting position cannot be maintained.

If determined that the EV traveling mode selecting position EV can be maintained in step ST3, the gear shift determining device terminates the present calculation process.

If determined that the EV traveling mode selecting position EV cannot be maintained in step ST3, the gear shift determining device sets the instructing gear shift stage at which the engine 10 in traveling can be restarted from the first to fifth gear stages 31 to 35 (step ST4). The instructing gear shift stage in this case will be described later.

When receiving information of the instructing gear shift stage from the gear shift determining device, the gear shift instructing device outputs visual information and/or audio information related to the instructing gear shift stage with respect to the gear shift instructing unit 81, and instructs the driver to perform the gear shift operation to the instructing gear shift stage (step ST5).

If determined that the current position of the shift lever 71a is not the EV traveling mode selecting position EV (gear shift position 1 to 5) in step ST2, the gear shift determining device determines whether to maintain the current gear shift stage (one of first to fifth gear stage 31 to 35), or to perform switch to the EV traveling mode. In this illustration, determination on whether or not the switch to the EV traveling mode is possible is first made (step ST6), and if such switching is possible, whether or not to switch to the EV traveling mode is determined (step ST7).

In step ST6, determination is made that the switch to the EV traveling mode is not possible if one of the four information for making the determination is met, the information being whether the current SOC amount Qsoc is lower than a predetermined amount Qsoc0, whether abnormality occurred in the hybrid system (HV system), whether traveling using the motor power torque is possible, and whether abnormality occurred in a starter motor 13 of the engine 10.

The current SOC amount Qsoc and the predetermined amount Qsoc0 are compared for the following reason. The switch to the EV traveling mode is prohibited when the remaining accumulation amount of the secondary battery 25 is reduced to an extent not suited for EV traveling, or when the remaining accumulation amount is reduced to an extent cancellation of the EV traveling is immediately demanded even if switched to the EV traveling. Thus, determination is made that the switch to the EV traveling mode is not possible if the current SOC amount Qsoc is lower than the predetermined amount Qsoc0.

If abnormality occurred in the hybrid system, the basic performance of the hybrid vehicle 1 is inhibited, as described above, and hence determination is made that the switch to the EV traveling mode is not possible.

The hybrid ECU 100 determines whether or not traveling (EV traveling or hybrid traveling) using the motor power torque is possible. For instance, in such determination, whether the motor/generator 20 is operating normally, whether the remaining power accumulation amount of the secondary battery 25 is enough to enable traveling at the motor power torque, whether the secondary battery 25 is normal, and the like are determined. The hybrid ECU 100 concludes that traveling using the motor power torque is possible if the motor/generator 20 and the secondary battery 25 are normal and the remaining accumulation amount is also sufficient, and permits such traveling. The hybrid ECU 100, for example, outputs a permission signal or sets a flag when giving such permission. Thus, the gear shift determining device determines that traveling using the motor power torque is not possible if the permission signal is not output or the flag is not set, and determines that switching to the EV traveling mode is not possible.

If abnormality occurred in the starter motor 13, determination is made that the switch to the EV traveling mode is not possible. The reason being to avoid situations where the engine 10 cannot be restarted after the switch to the EV traveling mode, and the traveling distance from becoming short with lowering in the SOC amount Qsoc by the EV traveling.

In step ST7, determination is made to switch to the EV traveling mode if one of the three information for making determination is met, the information being the current gear shift stage is the first gear stage 31 and the vehicle speed is lowered to an extent stopping of engine becomes a concern or is in parking, or abnormality occurred in the engine 10. The determination on whether or not in parking is carried out when the traveling mode at the time of starting is set to the EV traveling mode.

If the vehicle speed is lowered to an extent the stopping of engine becomes a concern at the first gear stage 31, the engine 10 may stop and cause the vehicle to stop if traveling is continued, and hence determination is made to switch to the EV traveling mode to avoid such situation.

If the traveling mode at the start is set to the EV traveling mode, the switch needs to be made to the EV traveling mode when starting. Thus, determination is made to switch to the EV traveling mode when in parking.

If abnormality occurred in the engine 10, it is not preferable to travel while driving such engine 10, and hence determination is made to switch to the EV traveling mode to stop the engine 10.

If determined that the switch to the EV traveling mode is not possible in step ST6, the gear shift determining device proceeds to step ST4 and sets the instructing gear shift stage from the first to fifth gear stages 31 to 35, and causes the gear shift instruction to the instructing gear shift stage to be carried out. This is the same for when determined not to switch to the EV traveling mode in step ST7. In this case, the current gear shift stage (one of the first to fifth gear stages 31 to 35) may be set as the instructing gear shift stage, but for instance, a gear shift stage (one of the first to fifth gear stages 31 to 35) different from the present may be set as the instructing gear shift stage according to the acceleration operation amount, and the like. For instance, if the acceleration request of the driver is made, the latter instructing gear shift stage is set to the lower speed stage side than the current gear shift stage.

If determined that the switch to the EV traveling mode is possible and that the switch is to be made to the EV traveling mode in steps ST6 and ST7, the gear shift instructing device receives a switch command to the EV traveling mode from the gear shift determining device, outputs visual information and/or audio information indicating to switch to the EV traveling mode with respect to the gear shift instructing unit 81, and instructs the driver to perform the gear shift operation to the EV traveling mode (step ST8).

In such hybrid vehicle 1, when the driver receives the gear shift instruction from the gear shift instructing system, the driver operates the shift lever 71a to one of the gear shift positions 1 to 5 or the EV traveling mode selecting position EV corresponding to the instructing gear shift stage with his/her own hand. The time from when the gear shift instructing system outputs the gear shift instruction to the driver until the driver completes the gear shift operation is referred to as a gear shift operation time t0. The gear shift operation time t0 differs depending on the driver since some driver performs the gear shift operation quickly and some driver performs the gear shift operation slowly. Thus, in the hybrid vehicle 1, the vehicle speed at the completion of the gear shift becomes lower for the driver of longer gear shift operation time t0.

Therefore, in the hybrid vehicle 1, the engine 10 in EV traveling and in stopped state is restarted when switched from the EV traveling mode to the engine traveling mode or the hybrid traveling mode according to the gear shift instruction. When restarting the engine 10 in traveling, the engine revolution number can be raised by transmitting the rotations of the driving wheels WL, WR to the output shaft 11 through the final deceleration mechanism 61, the instructing gear shift stage in the manual transmission 30 and the clutch 50 without using the starter motor 13. That is, the engine 10 in EV traveling and in stopped state is restarted by a so-called push-starting using the rotation of the driving wheels WL, WR. The engine 10 is restarted by performing fuel injection and the like with the rise in the engine revolution number, but cannot be restarted if the engine revolution number is too low. Thus, the engine revolution number needs to be raised to a height suited for restarting, but the engine revolution number cannot be raised to the desired height since the revolution number of the driving wheels WL, WR is low if the vehicle speed is low. Therefore, in the hybrid vehicle 1, it is preferable to have the instructing gear shift stage (hereinafter referred to as "reference instructing gear shift stage") corresponding to the vehicle speed enabling restart set when restarting the engine 10 in traveling.

However, if the driver of long gear shift operation time t0 is driving at the time of restart, the engine 10 may not be restarted due to lack of rise in the engine revolution number by the lowering in vehicle speed even if gear shifted to the reference instructing gear shift stage. Thus, the engine 10 may be restarted as long as the instructing gear shift stage at the time the restart is not enabled is changed to the low speed stage side of the reference instructing gear shift stage since the engine revolution number becomes higher even at the same low vehicle speed.

The gear shift instructing system of the present embodiment sets the instructing gear shift stage corresponding to the gear shift operation time t0 of the driver, that is, the gear shift operation property of the driver when stopping the EV traveling during the EV traveling and restarting the engine 10 in the stopped state, so that the engine 10 can be reliably restarted by the rotations of the driving wheels WL, WR regardless of which driver, what gear shift operation property the driver has, is driving.

To reliably restart the engine 10, it is necessary to grasp the gear shift operation property of the driver who is driving. Thus, the gear shift instructing system includes a learning device for learning the gear shift operation time t0 with respect to the manual transmission 30 of the driver. The learning device is prepared as one of the control functions of the hybrid ECU 100. This learning device, for example, counts the time (gear shift operation time t0) until the gear shift operation is completed starting from when the gear shift instructing device outputs the information of the instructing gear shift stage (gear shift instruction to one of the gear shift position 1 to 5 or the EV traveling mode selecting position EV) to the gear shift instructing unit 81.

The time of the completion of the gear shift operation is when the driver engages the clutch 50. Therefore, determination is made that the gear shift operation is completed herein when, for example, the hybrid ECU 100 grasps the start of rotation of the output shaft 11 directly or through the engine ECU 101 based on the detected signal of the crank angle sensor 12.

The learning operation of the learning device may always be performed as a new operation regardless of whether the driver is switched or not, but it is preferably executed until at least the gear shift operation property is grasped when the possibility of a switch of the driver is detected. The switch of the driver can be determined according to the reception result of a fastening/unfastening signal of the seatbelt, for example.

Furthermore, the learning operation of the learning device is preferably executed at the time of the gear shift instruction from the EV traveling mode selecting position EV to one of the gear shift position 1 to 5. In this case, the gear shift operation time t0 for every instructing gear shift stage may be obtained, the average value or the maximum value of the gear shift operation time t0 for every instructing gear shift stage may be assumed as a learned value, and the gear shift operation time t0 of the instructing gear shift stage of high usage frequency at the restart of the engine 10 may be obtained. The learning operation of the learning device may be executed at the time of the gear shift instruction from one of the gear shift positions 1 to 5 to the EV traveling mode selecting position EV, or at the time of the gear shift instruction among the gear shift positions 1 to 5. In this case, the movement distance and the movement direction of the shift lever 71a differ from the time of the gear shift operation from the EV traveling mode selecting position EV, and hence the gear shift operation time at the time of the learning operation is corrected with the movement distance and the like of the shift lever 71a, and such corrected time is assumed as the gear shift operation time t0.

The learned result of the learning device is stored in the storage device and the like (not illustrated). The learned result may be, for example, erased when the possibility of a switch of the driver is detected or the end of driving is detected, or may be stored if the driver can be identified with storage information of the driver's seat position, storage information of the key, or the like. If the learned result is erased from the storage device and the like, the initial value of the gear shift operation time t0 set in advance is used until the learned result is newly obtained.

The gear shift instructing system includes a vehicle speed estimating device for estimating a vehicle speed V0 at the time of the completion of the gear shift operation. The vehicle speed estimating device is prepared as one of the control functions of the hybrid ECU 100. The vehicle speed estimating device estimates the vehicle speed V0 at the time of the completion of the gear shift operation based on information such as a learned value of the gear shift operation time t0, the current vehicle speed Vnow, and the gradient 8 of the traveling path. The gradient θ of the traveling path is detected by a gradient detecting device 92. For example, a vehicle before-after acceleration sensor may be used for the gradient detecting device 92, and the gradient can be estimated based on the vehicle before-after acceleration. The vehicle speed V0 at the time of the completion of the gear shift operation is obtained using the following equation 1.

$$V0 = Vnow - \frac{1}{m} \int_0^{t0} f(R) dt \qquad (1)$$

Here, "m" in equation 1 is the mass of the hybrid vehicle 1. "R" in equation 1 is the traveling resistance, and is obtained with the following equation 2. "a", "b", and "c" in equation 2 are constants specific to the vehicle, and "g" is gravitational acceleration. "mgsinθ" is a component related to the gradient θ of the traveling path.

$$R = aVnow^2 + bVnow + c + mg \sin \theta \qquad (2)$$

If the braking force is acting on the hybrid vehicle 1, the vehicle V0 at the time of the completion of the gear shift operation is estimated in view of such braking force.

The gear shift determining device in this case uses the estimated vehicle speed in place of the current vehicle speed. The gear shift determining device sets the instructing gear shift stage at which the engine 10 can be restarted based on the estimated vehicle speed, and the like.

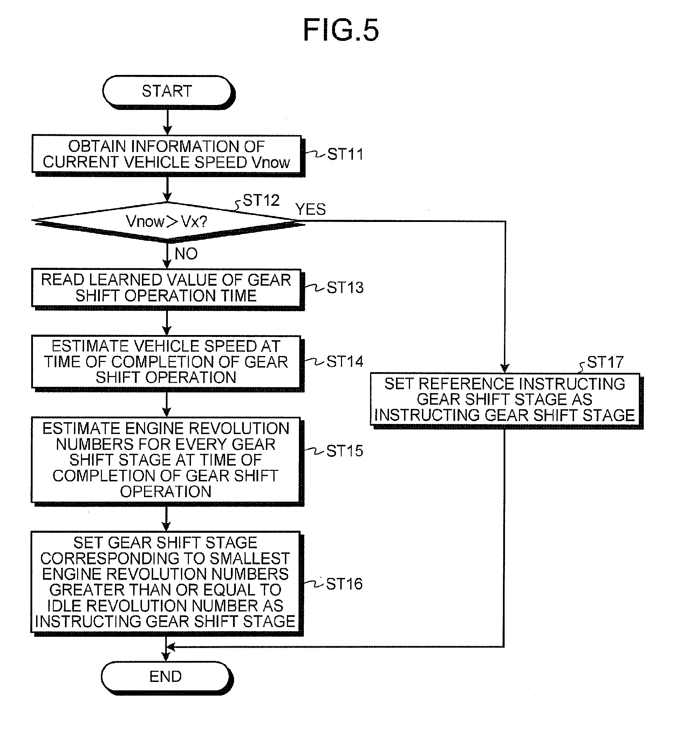

The setting operation of the instructing gear shift stage of when stopping the EV traveling during the EV traveling and restarting the engine 10 in the stopped state will now be described based on the flowchart of FIG. 5. The flowchart of FIG. 5 describes in detail the instructing gear shift stage setting operation in step ST4 when determination is made that the continuation of the EV traveling is not possible in step ST3 of the flowchart of FIG. 4.

First, the gear shift determining device obtains the information of the current vehicle speed Vnow when the continuation of the EV traveling is not possible (step ST11), and compares such vehicle speed Vnow and a predetermined vehicle speed Vx (step ST12). For instance, if the current vehicle speed Vnow is low speed when gear shifted to the reference instructing gear shift stage, the possibility the vehicle speed may lower to the speed that makes the restart of the engine 10 difficult is high if the gear shift operation time t0 of the driver is long. If the current vehicle speed Vnow is high speed, the vehicle speed does not lower to the vehicle speed that makes the restart of the engine 10 difficult even if the gear shift operation time t0 of the driver is long. Therefore, even if the gear shift operation time t0 to the reference instructing gear shift stage is slightly long, the vehicle speed that enables the restart of the engine 10 is obtained through experiments and simulations, and the value on the lower speed side of such vehicle speeds is set as the predetermined vehicle speed Vx. Therefore, if the current vehicle speed Vnow is greater than or equal to the predetermined vehicle speed Vx, the engine 10 can be restarted even at the reference instructing gear shift stage.

If the current vehicle speed Vnow is lower than the predetermined vehicle speed Vx in step ST12, the gear shift determining device reads the learned result (learned value of the gear shift operation time t0) of the learning device from the storage device, and the like (step ST13). The vehicle speed estimating device estimates the vehicle speed V0 at the time of the completion of the gear shift operation based on information such as the vehicle speed Vnow and the learned value of the gear shift operation time t0 (step ST14).

The gear shift determining device estimates the engine revolution numbers Ne1 to Ne5 for every first to fifth gear stage 31 to 35 when lowered to the estimated vehicle speed V0, that is, at the time of the completion of the gear shift operation (step ST15). The gear shift determining device then sets the gear shift stage (one of the first to fifth gear stages 31 to 35) corresponds to that which is greater than or equal to the idle revolution number Neidle and which is minimum from the engine revolution numbers Ne1 to Ne5 as the instructing gear shift stage (step ST16). In the hybrid vehicle, the gear shift to the instructing gear shift stage suppresses the rapid shift in the drive torque of the driving wheels WL, WR by the engine torque.

If determined that the current vehicle speed Vnow is greater than or equal to the predetermined vehicle speed Vx in step ST12, the gear shift determining device determines as the time of normal restart of the engine 10, and sets the reference instructing gear shift stage as the instructing gear shift stage (step ST17).

Therefore, the gear shift instructing system of the present embodiment can urge the gear shift instruction to the instructing gear shift stage (one of the first to fifth gear stages 31 to 35) that accords with the gear shift operation property of the driver when there is a need to stop the EV traveling during the EV traveling and restart the engine 10 in the stopped state. The gear shift instructing system thus can raise the engine revolution number up to the revolution number suited for the restart of the engine 10 by the rotation of the driving wheels WL, WR thus enabling the restart of the engine 10 in traveling even if the gear shift operation of the driver is slow by gear shift to the instructing gear shift stage suited to the vehicle speed lowered by the length of such gear shift operation time t0.

In the present embodiment, the hybrid vehicle 1 has been described by way of example, but the gear shift instructing system of the present embodiment is also applicable to a vehicle in which only the engine is mounted as a power source and in which the manual transmission (normal transmission without EV traveling mode selecting position EV as in the present embodiment) is mounted. For instance, in such vehicle, the so-called free-run of stopping the engine during traveling is carried out to enhance the fuel economy, and hence the free-run needs to be stopped at some time and restart the engine. At the restart of the engine, the vehicle speed is lowered by the free run, and thus the engine revolution number may not be raised up to the revolution number suited for restart with the gear shift stage same as before the start of free-run, although it depends on the vehicle speed. Thus, the gear shift instructing system sets the instructing gear shift stage in view of the amount of lowering in vehicle speed by the free-run. However, since the gear shift operation property to the instructing gear shift stage differs for every driver, as described in the previous illustration, the setting of the instructing gear shift stage corresponding to the relevant gear shift operation property is necessary in such vehicle as well. Therefore, the gear shift instructing system preferably executes the setting operation of the instructing gear shift stage illustrated in FIG. 5, similar to the previous example, in the vehicle as well, where the engine in traveling can be restarted regardless of the difference in the gear shift operation property of the driver.

The manual transmission 30 has been described as an example of the transmission in the present embodiment, but such transmission may be, for example, a manual transmission without a clutch pedal 51 and with a clutch that is automatically controlled by hydraulic pressure, or the like. In this type of manual transmission, the time difference involved in the operation of the clutch pedal 51 does not occur, but the gear shift operation time differs depending on the driver since the shift lever operation time is different for every driver. Therefore, the vehicle can restart the engine in traveling regardless of the difference in the gear shift operation property of the driver by applying the gear shift instructing system of the present embodiment to the relevant vehicle.

Industrial Applicability

Therefore, the gear shift instructing system of the vehicle according to the present invention is useful in a technique of restarting the engine in a stopped state during traveling regardless of the difference in the gear shift operation property of the driver with respect to the transmission.

Reference Signs List

1       HYBRID VEHICLE

10      ENGINE

13      STARTER MOTOR

20      MOTOR/GENERATOR

25      SECONDARY BATTERY

30      MANUAL TRANSMISSION

31      to 35 FIRST TO FIFTH SPEED GEAR STAGE

50      CLUTCH

51      CLUTCH PEDAL

71      GEAR SHIFT OPERATING DEVICE

71a    SHIFT LEVER

71b    SHIFT GAUGE

72    EV TRAVELING MODE SELECTING POSITION DETECTING UNIT

73    GEAR SHIFT POSITION DETECTING UNIT

81    GEAR SHIFT INSTRUCTING UNIT

91    VEHICLE SPEED DETECTING DEVICE

92    GRADIENT DETECTING DEVICE

100    HYBRID ECU

101    ENGINE ECU

102    MOTOR/GENERATOR ECU

EV    EV TRAVELING MODE SELECTING POSITION

**Claims**

1.    A gear shift instructing system of a vehicle, comprising:

a learning device configured to learn a gear shift operation time of a driver with respect to a transmission mounted on the vehicle; and
a gear shift instructing device configured to set an instructing gear shift stage to the transmission suited for restart of an engine in a stopped state during traveling according to a learned result of the learning device, and instruct the driver to perform a gear shift operation to the instructing gear shift stage.

2.    The gear shift instructing system of the vehicle according to claim 1, wherein the instructing gear shift stage is a gear shift stage corresponding to an engine revolution number greater than or equal to an idle revolution number and a minimum of engine revolution numbers at a time of completion of the gear shift operation estimated for every gear shift stage.

3.    The gear shift instructing system of the vehicle according to claim 1 or 2, wherein the gear shift instructing device performs a setting of the instructing gear shift stage corresponding to the learned result when in low-speed traveling, and sets a reference instructing gear shift stage corresponding to a vehicle speed irrespective of the learned result as the instructing gear shift stage when in high-speed traveling.

4.    The gear shift instructing system according to claim 1, 2, or 3, wherein the vehicle is a hybrid vehicle including an electrical power source in addition to the engine, has a gear shift position for every gear shift stage of the transmission when traveling using a power of the engine and a traveling mode selecting position for traveling only with power of the electrical power source, and includes a gear shift operating device configured to operate the transmission according to the gear shift position or the traveling mode selecting position selected by the gear shift operation of the driver.

FIG.1

## FIG.2

## FIG.3

EP 2 574 829 A1

# FIG.4

START

ST1
POSITION OF
SHIFT LEVER? — N OR R

1 TO 5, EV

ST2
IS POSITION
OF SHIFT LEVER
EV TRAVELING MODE
SELECTING POSITION
EV? — NO

YES

ST3
CAN
CURRENT POSITION
OF SHIFT LEVER BE
MAINTAINED? — YES

NO

ST6
IS SWITCH TO
EV TRAVELING MODE
POSSIBLE? — NO

YES

ST7
IS SWITCH TO
EV TRAVELING MODE
TO BE MADE? — NO

YES

ST4
SET INSTRUCTING GEAR SHIFT
STAGE FROM FIRST TO FIFTH
GEAR SHIFT STAGES

ST8
INSTRUCT GEAR SHIFT TO EV
TRAVELING MODE

ST5
INSTRUCT GEAR SHIFT TO
INSTRUCTING GEAR SHIFT STAGE

END

# FIG.5

```
                    ┌──────────────┐
                    │    START     │
                    └──────┬───────┘
                           │
           ┌───────────────▼────────────────┐
           │  OBTAIN INFORMATION OF         │  ST11
           │  CURRENT VEHICLE SPEED Vnow    │
           └───────────────┬────────────────┘
                           │           ST12      YES
                    ◇──────────────────◇─────────────────┐
                    │     Vnow>Vx?     │                 │
                    ◇──────────────────◇                 │
                           │ NO                          │
           ┌───────────────▼────────────────┐            │
           │  READ LEARNED VALUE OF GEAR    │  ST13      │
           │  SHIFT OPERATION TIME          │            │
           └───────────────┬────────────────┘            │
                           │                             │
           ┌───────────────▼────────────────┐            │
           │  ESTIMATE VEHICLE SPEED AT     │  ST14      │
           │  TIME OF COMPLETION OF GEAR    │            │         ST17
           │  SHIFT OPERATION               │    ┌───────▼──────────────────┐
           └───────────────┬────────────────┘    │  SET REFERENCE INSTRUCTING│
                           │                      │  GEAR SHIFT STAGE AS      │
           ┌───────────────▼────────────────┐    │ INSTRUCTING GEAR SHIFT STAGE│
           │  ESTIMATE ENGINE REVOLUTION    │    └───────┬──────────────────┘
           │  NUMBERS FOR EVERY GEAR        │  ST15      │
           │  SHIFT STAGE AT TIME OF        │            │
           │  COMPLETION OF GEAR SHIFT      │            │
           │  OPERATION                     │            │
           └───────────────┬────────────────┘            │
                           │                             │
           ┌───────────────▼────────────────┐            │
           │  SET GEAR SHIFT STAGE          │            │
           │  CORRESPONDING TO SMALLEST     │            │
           │  ENGINE REVOLUTION NUMBERS     │  ST16      │
           │  GREATER THAN OR EQUAL TO      │            │
           │  IDLE REVOLUTION NUMBER AS     │            │
           │  INSTRUCTING GEAR SHIFT STAGE  │            │
           └───────────────┬────────────────┘            │
                           │◄────────────────────────────┘
                    ┌──────▼───────┐
                    │     END      │
                    └──────────────┘
```

## INTERNATIONAL SEARCH REPORT

| | International application No. |
|---|---|
| | PCT/JP2010/057578 |

A. CLASSIFICATION OF SUBJECT MATTER
*F16H63/42*(2006.01)i, *B60W10/10*(2006.01)i, *B60W20/00*(2006.01)i

According to International Patent Classification (IPC) or to both national classification and IPC

B. FIELDS SEARCHED

Minimum documentation searched (classification system followed by classification symbols)
F16H63/42, B60W10/10, B60W20/00

Documentation searched other than minimum documentation to the extent that such documents are included in the fields searched
Jitsuyo Shinan Koho          1922–1996     Jitsuyo Shinan Toroku Koho    1996–2010
Kokai Jitsuyo Shinan Koho    1971–2010     Toroku Jitsuyo Shinan Koho    1994–2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-319924 A  (Toyota Motor Corp.), 17 November 2005 (17.11.2005), entire text; all drawings & US 2005/0247495 A1 | 1-4 |
| Y | JP 11-351372 A  (Toyota Motor Corp.), 24 December 1999 (24.12.1999), paragraph [0107] (Family: none) | 1-4 |
| Y | JP 2008-97055 A  (Tokai Rika Co., Ltd.), 24 April 2008 (24.04.2008), claim 1 (Family: none) | 1-4 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 July, 2010 (16.07.10) | 03 August, 2010 (03.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/057578 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2009-156436 A  (Aisin AW Co., Ltd.),<br>16 July 2009 (16.07.2009),<br>paragraph [0047]<br>& US 2009/0171539 A1 | 1-4 |

Form PCT/ISA/210 (continuation of second sheet) (July 2009)

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08216700 B
- JP 2008095881 A
- JP H05180339 B